# EUROPÄISCHE PATENTSCHRIFT

(11) **EP 0 729 217 B1**
(45) Veröffentlichungstag und Bekanntmachung des Hinweises auf die Patenterteilung: **12.01.2000**
(21) Anmeldenummer: 96101836.3
(22) Anmeldetag: 08.02.1996
(51) Int. Cl.: H02K 21/04, H02K 16/02

(54) **Hybriderregte elektrische Maschine**
Hybride excited synchronous machine
Machine synchrone à excitation hybride

(30) Priorität: 21.02.1995 DE 19505966
(43) Veröffentlichungstag der Anmeldung: 28.08.1996
(73) Patentinhaber: SIEMENS AKTIENGESELLSCHAFT, 80333 München (DE)
(72) Erfinder: Brandes, Jürgen, Dr., D-97616 Bad Neustadt (DE); Schüller, Uwe, Dr., D-98693 Ilmenau (DE)

(56) Entgegenhaltungen:
- EP-A- 0 228 873
- EP-A- 0 620 634
- DE-A- 1 638 233
- US-A- 4 570 333
- US-A- 4 855 700
- US-A- 5 097 166
- US-A- 5 132 581
- US-A- 5 159 220

## Beschreibung

Die Erfindung betrifft eine hybriderregte elektrische Maschine gemäß dem Oberbegriff des Anspruchs 1.

Eine solche Maschine ist durch die EP-A-0 620 634 bekannt. Bei dieser bekannten Maschine ist das Ständerblechpaket axial in zwei Pakethälften unterteilt und die für die elektrische Erregung erforderliche Erregerspule zwischen den beiden Pakethälften angeordnet. Bei einer solchen im Ständer angeordneten Erregerspule ergibt sich eine große Streuung im Bereich der Ständerzähne, da die Erregerspule radial außen zum Ständerrücken hin angeordnet ist. Außerdem führt die Anordnung der Erregerspule zwischen den Pakethälften des Ständerblechpaketes zu einer aufwendigen Fertigung des Ständers. Ferner weist die Erregerspule einen entsprechend großen Durchmesser auf, so daß einerseits viel Leitungsmaterial für die Spule benötigt wird und damit andererseits auch wieder die Leitungsverluste in der Spule ansteigen.

Aus der US-A-5 132 581 ist eine elektrische Maschine bekannt, deren Rotor eine Erregerspule und eine Vielzahl Permanentmagnete aufweist. Diese Anordnung der Erregerspule im Läufer führt zu einer aufwendigen Fertigung des Läufers.

Der Erfindung liegt die Aufgabe zugrunde, eine Maschine der gattungsgemäßen Art so auszubilden, daß ein herkömmlich ausgebildeter Ständer verwendet werden kann und sowohl die Streu- als auch Leitungsverluste wesentlich vermindert sind.

Die Maschine soll außerdem möglichst kostengünstig und einfach herzustellen sein.

Die Lösung der gestellten Aufgabe gelingt durch die im Kennzeichen des Anspruchs 1 angegebenen Merkmale. Die Anordnung der Erregerspule im Läufer führt zu einem kleineren Durchmesser derselben, so daß damit entsprechend weniger Leitungsmaterial benötigt wird und gleichzeitig die Verluste verringert werden, da der elektrische Widerstand der Erregerspule kleiner ist. Die Erregerspule liegt ferner näher am Luftspalt, was zu einer Verminderung der Streuflüsse führt.

Die Montage der Erregerspule erfolgt durch bloßes Aufstecken auf die Läuferwelle.

Aus fertigungstechnischen Gründen kann es vorteilhaft sein, daß die Dauermagnete an der Oberfläche der Läuferhälften angeordnet sind. Eine weitere Möglichkeit zur Verminderung der für die Drehzahl- bzw. Spannungsregelung der Maschine benötigten elektrischen Leistung besteht darin, daß die Dauermagnete in im Blechpaket vorgesehene, sich in Umfangsrichtung erstreckende Aufnahmeöffnungen eingesetzt sind, wobei die Anordnung und Gestaltung der Aufnahmeöffnungen so getroffen ist, daß ein magnetischer Kurzschluß der in die Aufnahmeöffnungen eingesetzten Dauermagnete verhindert ist. Infolge der Unterbringung der Dauermagnete im Läuferkern entfallen jegliche den Luftspalt vergrößernde Befestigungsmittel, wie sie bei einer Anordnung der Dauermagnete am Außenumfang des Läuferkernes erforderlich wären.

Ein magnetischer Kurzschluß der in die Aufnahmeöffnungen eingesetzten Dauermagnete läßt sich auf einfache Weise dadurch vermeiden, daß die an die Aufnahmeöffnungen zum Läuferumfang hin angrenzenden, sekantenartigen Paketteile des Läuferblechpakets lediglich über Sättigungsstege mit den benachbarten, unerregten Polteilen verbunden sind.

Die Halterung der Dauermagnete in den Aufnahmeöffnungen erfolgt zweckmäßigerweise durch Vergießen der Dauermagnete mittels einer aushärtbaren Masse, z.B. Gießharz.

Zur Montageerleichterung trägt es bei, wenn die Wicklung der Erregerspule auf einem Wicklungsträger angeordnet ist. Damit ergibt sich für die Erregerspule eine entsprechende Festigkeit und auch ein erhöhter Schutz gegenüber mechanischen Beanspruchungen. Dieser Schutz wird noch dadurch erhöht, daß der Wicklungsträger auf seiner der Umfangsseite der Läuferhälften entsprechenden Umfangsseite mittels eines Wandteiles verschlossen ist. Ist das umfangsseitige Wandteil einstückig mit einer sich radial erstreckenden Seitenwand des Wicklungsträgers verbunden, dann entfallen zusätzliche Montagearbeiten für das Anbringen eines solchen Wandteiles.

Weist der Wicklungsträger in axialer Richtung einen U-förmigen Querschnitt auf, dann ist einerseits im eingebauten Zustand des Wicklungsträgers der in Umfangsrichtung gewünschte geschlossene Zustand des Wicklungsträgers von vornherein gegeben, andererseits kann die Wicklung leicht über die im nicht eingebauten Zustand noch offene Seite des Wicklungsträgers in diesen eingebracht werden.

Die Montage des Läufers wird dadurch erleichtert und vereinfacht, daß die Läuferhälften und die Erregerspule als selbständig handhabbare, auf der Läuferwelle montierbare Einzelmodule ausgebildet sind. Die entsprechenden Teile können jeweils für sich gefertigt werden und brauchen dann nur noch in entsprechender Stecktechnik auf die Läuferwelle aufgebracht werden.

Vorteilhaft ist es, den Wicklungsträger drehgesichert auf der Läuferwelle anzuordnen. Dies wird auf einfache Weise dadurch erreicht, daß am Wicklungsträger in entsprechende Ausnehmungen der Blechpakete einer oder beider Läuferhälften eingreifende Axialvorsprünge vorgesehen sind.

Sowohl einer Erhöhung des elektrischen als auch des mechanischen Schutzes dient es, wenn die auf den Wicklungsträger aufgebrachte Wicklung und/oder der Wicklungsträger in eine aushärtbare Masse eingebettet sind.

Anhand eines in der Zeichnung dargestellten Ausführungsbeispiels wird die Erfindung nachfolgend näher beschrieben. Es zeigt:
- FIG 1: in schematischer Darstellung eine hybriderregte elektrische Maschine im Längsschnitt,
- FIG 2: den Läufer der Maschine im Schnitt entlang der Linie II-II in FIG 1,
- FIG 3: den Läufer der Maschine im Schnitt entlang der Linie III-III in FIG 1,
- FIG 4: eine weitere mögliche Anordnung von Dauermagneten im Läuferkern,
- FIG 5: einen in axialer Richtung U-förmig ausgebildeten, mit einer Erregerwicklung versehenen Wicklungsträger,
- FIG 6: eine weitere Ausführungsform eines Wicklungsträgers.

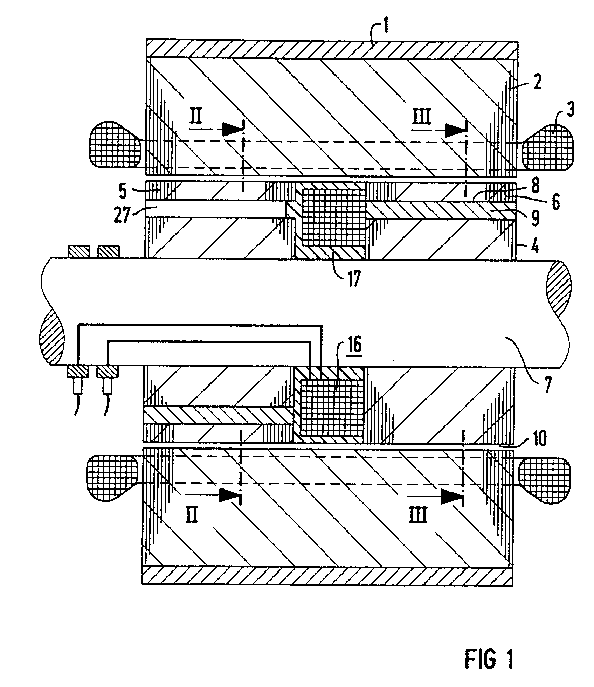

Die in FIG 1 dargestellte hybriderregte Synchronmaschine weist ein in einem Rückschlußjoch 1 angeordnetes, mit einer Ständerwicklung 3 versehenes Ständerblechpaket 2 auf. Der Läufer 4 dieser Maschine ist in zwei Läuferhälften 5 und 6 axial unterteilt, die mit axialem Abstand zueinander auf der Welle 7 des Läufers 4 montiert sind. Im Blechpaket jeder Läuferhälfte 5 und 6 sind Aufnahmeöffnungen 8 vorgesehen, in die Dauermagnete 9 eingesetzt sind. Die Dauermagnete 9 können durch eine in die Aufnahmeöffnungen 8 eingebrachte aushärtbare Masse in diesen Öffnungen gehaltert sein. Die Dauermagnete 9 sind hinsichtlich ihrer Polarität in der einen Läuferhälfte 5 so angeordnet, daß sie beispielsweise mit ihrem Nordpol N zum Luftspalt 10 der Maschine hinweisen. In der anderen Läuferhälfte 6 ist die Anordnung der Dauermagnete 9 so getroffen, daß diese mit ihrem Südpol S zum Luftspalt 10 hin gerichtet sind. Die Dauermagnete 9 der einen Läuferhälfte 5 sind außerdem gegenüber den Dauermagneten 9 der anderen Läuferhälfte 6 um eine Polteilung gegeneinander versetzt.

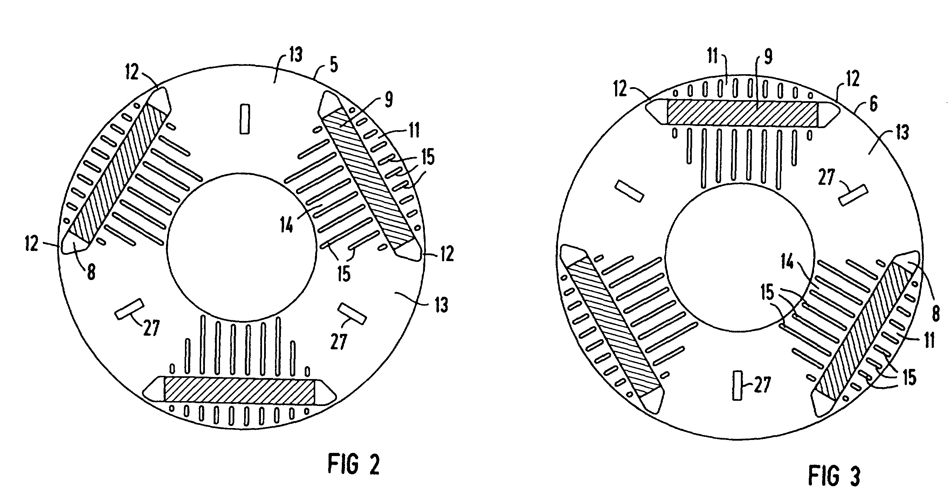

Wie die FIG 2 und 3 zeigen, sind die sich an die Aufnahmeöffnungen 8 nach radial außen hin anschließenden, sich jeweils über eine Polteilung erstreckenden sekantenartigen Blechteile 11 des Blechpaketes der jeweiligen Läuferhälfte 5 bzw.6 über schmale Sättigungsstege 12 mit den benachbarten, nicht mit Dauermagneten bestückten, d.h. unerregten Polteilen 13 verbunden. Die unerregten Polteile 13 erstrecken sich umfangsmäßig jeweils ebenfalls über eine Polteilung. Durch die Sättigungsstege 12 werden einerseits die sekantenartigen Blechteile 11 mechanisch gehalten und andererseits wird durch sie ein magnetischer Kurzschluß der in den Aufnahmeöffnungen 8 eingesetzten Dauermagnete 9 verhindert. Durch die Anordnung der Dauermagnete 9 im Blechpaket besteht eine hohe mechanische Sicherung gegenüber der bei der Drehbewegung des Läufers 4 auftretenden Fliehkraft. Damit eignet sich ein derartiger Läufer auch für sehr hohe Drehzahlen.

In den sekantenartigen Blechteilen 11 und dem sich an die Aufnahmeöffnungen 8 nach radial innen zur Läuferwelle 7 hin anschließenden Polsektoren 14 sind Schlitze 15 vorgesehen, die sich im wesentlichen parallel zu dem diese Teile durchsetzenden magnetischen Fluß erstrecken. Durch diese Schlitze 15 wird somit der magnetische Widerstand in Querrichtung zum magnetischen Fluß erhöht und somit eine Reduzierung von Streuverlusten erreicht.

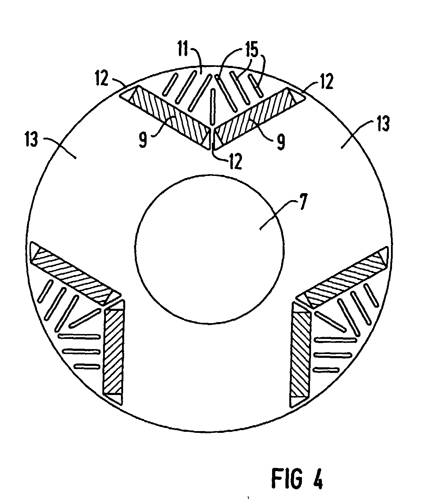

FIG 4 zeigt eine weitere Anordnungsvariante der Dauermagnete 9 im Blechpaket der Läuferhälften 5 und 6. Durch die Schrägstellung der Dauermagnete 9 kann mehr Magnetmaterial im Blechpaket untergebracht werden.

In den zwischen den beiden Läuferhälften 5 und 6 bestehenden Zwischenraum ist eine als Ringspule ausgebildete elektrische Erregerspule 16 eingefügt.

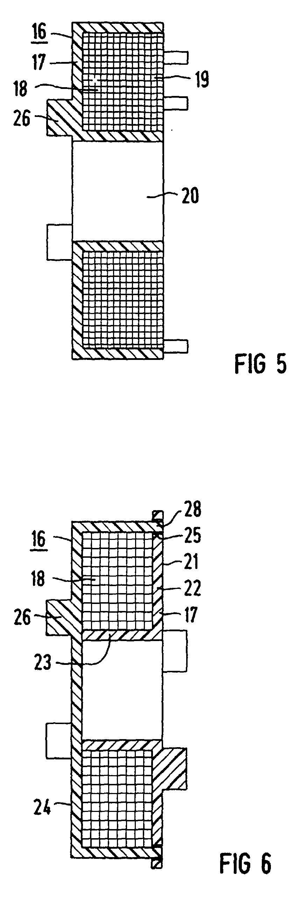

Diese Erregerspule 16 weist einen Wicklungsträger 17 auf, auf dem die Wicklung 18 der Erregerspule aufgebracht ist. Gemäß der in FIG 5 gezeigten Ausführungsform weist der Wicklungsträger 17 einen in axialer Richtung U-förmigem Querschnitt auf, so daß ein ringförmiger Raum 19 gebildet ist. In den ringförmigen Raum 19, der nach einer Seite hin offen ist, kann die Wicklung 18 fertigungstechnisch leicht eingebracht werden. Mit der Innenöffnung 20 des Ringraumes 19 kann der Wicklungsträger 17 auf die Läuferwelle 4 aufgesteckt werden.

Die FIG 6 zeigt einen Wicklungsträger 17, der zweiteilig aufgebaut ist. Ein erster Teil 21 besteht aus einer sich radial erstreckenden Flanschwand 22, an der eine axial vorstehende Hohlnabe 23 angeformt ist. Mit dieser Hohlnabe 23 ist der Wicklungsträger 17 wiederum auf die Läuferwelle 4 aufsteckbar. Ein zweiter Teil 24 des Wicklungsträgers 17 ist topfförmig ausgebildet und dient als Abdeckteil. Bei einem solchen zweiteiligen Wicklungsträger kann die Wicklung 18 zunächst ungehindert auf dem Außenumfang der Hohlnabe 23 aufgewickelt werden. Danach wird das Abdeckteil 24 aufgesteckt, welches durch in Rastöffnungen 25 der Flanschwand 22 eingreifende Rastvorsprünge 26 mit dem ersten Teil 21 verbindbar ist. Dadurch ergibt sich eine ringsum geschlossene Umhüllung für die Wicklung 18.

Ein weiterer elektrischer und mechanischer Schutz wird durch Vergießen der auf den Wicklungsträger 17 aufgebrachten Wicklung 18 erreicht.

Neben dem Wicklungsträger 17 können auch die beiden Läuferhälften 5 und 6 als selbständig handhabbare Modulteile ausgebildet werden. Zur Bildung der Läufers 4 werden dann diese Modulteile auf die Läuferwelle 4 aufgebracht und auf dieser befestigt. Die Erregerspule 16 wird dabei nach dem Aufstecken der einen Läuferhälfte 5 oder 6 auf die Läuferwelle 4 aufgebracht. In axialer Richtung ist die Erregerspule 16 zwischen den beiden Läuferhälften 5 und 6 festgelegt. Um sie auch gegen Verdrehen zu sichern, sind am Wicklungsträger 17 Axialvorsprünge 26 angeformt, die in entsprechende an der Stirnseite der Blechpakete der Läuferhälften 5 und 6 vorhandene Halteschlitze 27 eingreifen. Die Halteschlitze 27 können durch Ausstanzungen in den einzelnen Blechen der Blechpakete gebildet werden.

Durch die mit Gleichstrom gespeiste Erregerspule 16 kann ein den magnetischen Fluß der Dauermagnete 9 verstärkender oder schwächender magnetischer Fluß erzeugt werden. Hierdurch ergibt sich ein großer Regelbereich für die Drehzahl bzw. Spannung der Maschine. Die Anordnung der Erregerspule 16 im Läufer der Maschine führt dazu, daß die Erregerspule nahe oder sogar unmittelbar bis an den Luftspalt 10 der Maschine reicht. Damit werden die Streuverluste sehr stark vermindert. Wegen des kleinen Durchmessers der Erregerspule 16 gegenüber einer Anordnung derselben im Ständer, wie dies beim Stand der Technik der Fall ist, ergibt sich ein geringerer Kupferbedarf für die Wicklung 18. Da die Erregerspule 16 zur Erzeugung eines bestimmten magnetischen Flusses einen entsprechenden Erregerstrom erfordert, sind die elektrischen Verluste bei einer im Läufer angeordneten Erregerspule 16 wesentlich geringer, da wegen der durchmesserbedingten kürzeren Länge des Wicklungsdrahtes der elektrische Widerstand der Erregerspule 16 kleiner ist.

## Patentansprüche

1. Hybriderregte elektrische Maschine, mit einem in einem magnetischen Rückschlußjoch (1) angeordneten und eine Ständerwicklung (3) tragenden Ständerblechpaket (2), bei welcher Maschine der Läufer (4) axial in zwei Läuferhälften (5 und 6) unterteilt ist und jede Läuferhälfte (5 bzw. 6) ihrer Polteilung entsprechend aufeinanderfolgend dauermagneterregte Pole (11) und unerregte Pole (13) aufweist, wobei die eine Läuferhälfte (5) mit Dauermagneten (9) bestückt ist, deren Nordpole zum Luftspalt der elektrischen Maschine weisen und die andere Läuferhälfte (6) mit Dauermagneten (9) bestückt ist, deren Südpole zum Luftspalt der elektrischen Maschine weisen und die dauermagneterregten Pole (11) beider Läuferhälften (5 und 6) um eine Polteilung gegeneinander versetzt sind, welche Maschine ferner noch mit einer als Ringspule ausgebildeten elektrischen Erregerspule (16) versehen ist, **dadurch gekennzeichnet**, daß die Läuferhälften (5 und 6) axial voneinander beabstandet auf der Läuferwelle (7) angeordnet sind und die Erregerspule (16) in dem zwischen den Läuferhälften (5 und 6) bestehenden Zwischenraum eingefügt ist.

2. Maschine nach Anspruch 1,
**dadurch gekennzeichnet,**
daß die Dauermagnete (9) an der Oberfläche der Läuferhälften (5 und 6) angeordnet sind.

3. Maschine nach Anspruch 1,
**dadurch gekennzeichnet**,
daß die Dauermagnete (9) in im Blechpaket vorgesehene, sich in Umfangsrichtung erstreckende Aufnahmeöffnungen (8) eingesetzt sind, wobei die Anordnung und Gestaltung der Aufnahmeöffnungen (8) so getroffen ist, daß ein magnetischer Kurzschluß der in die Aufnahmeöffnungen (8) eingesetzten Dauermagnete (9) verhindert ist.

4. Maschine nach Anspruch 3,
**dadurch gekennzeichnet**,
daß die an die Aufnahmeöffnungen (8) zum Läuferumfang hin angrenzenden sekantenartigen Paketteile (11) des Läuferblechpaketes lediglich über Sättigungsstege (12) mit den benachbarten unerregten Polteilen (13) verbunden sind.

5. Maschine nach Anspruch 3 oder 4,
**dadurch gekennzeichnet**,
daß die Dauermagnete (9) durch Einbringen einer aushärtbaren Masse in den Aufnahmeöffnungen (8) gehalten sind.

6. Maschine nach einem der vorhergehenden Ansprüche,
**dadurch gekennzeichnet**,
daß die Wicklung (18) der Erregerspule (16) auf einem Wicklungsträger (17) angeordnet ist.

7. Maschine nach Anspruch 6,
**dadurch gekennzeichnet**,
daß der Wicklungsträger (17) auf seiner der Umfangsseite der Läuferhälften (5 bzw. 6) entsprechenden Umfangsseite mittels eines Wandteiles (24) verschlossen ist.

8. Maschine nach Anspruch 7,
**dadurch gekennzeichnet**,
daß das umfangsseitige Wandteil (24) einstückig mit einer sich radial erstreckenden Seitenwand des Wicklungsträgers (17) verbunden ist.

9. Maschine nach Anspruch 8,
**dadurch gekennzeichnet**,
daß der Wicklungsträger (17) in axialer Richtung einen U-förmigen Querschnitt aufweist.

10. Maschine nach einem der vorhergehenden Ansprüche,
**dadurch gekennzeichnet**,
daß die Läuferhälften (5 und 6) und die Erregerspule (16) als selbständig handhabbare, auf der Läuferwelle (7) montierbare Einzelmodule ausgebildet sind.

11. Maschine nach einem der Ansprüche 6 bis 10,
**dadurch gekennzeichnet**,
daß der Wicklungsträger (17) drehgesichert auf der Läuferwelle (7) angeordnet ist.

12. Maschine nach Anspruch 11,
**dadurch gekennzeichnet**,
daß am Wicklungsträger (17) in entsprechende Ausnehmungen (27) der Blechpakete einer oder beider Läuferhälften (5 oder 6) eingreifende Axialvorsprünge (26) vorgesehen sind.

13. Maschine nach Anspruch 11,
**dadurch gekennzeichnet**,
daß der Wicklungsträger (17) durch Preßsitz auf der Läuferwelle (7) gehalten ist.

14. Maschine nach einem der Ansprüche 6 bis 13,
**dadurch gekennzeichnet**,
daß die auf den Wicklungsträger (17) aufgebrachte Wicklung (18) und/oder der Wicklungsträger (17) in eine aushärtbare Masse eingebettet sind.

## Claims

1. Hybrid-excited electric machine, having a laminated stator core (2) which is arranged in a magnetic return yoke (1) and supports a stator winding (3), in which machine the rotor (4) is divided axially into two rotor halves (5 and 6) and each rotor half (5 or 6) has, arranged in succession in accordance with its pole pitch, permanent-field poles (11) and non-excited poles (13), with the one rotor half (5) being provided with permanent magnets (9), the north poles of which point towards the air gap of the electric machine, and the other rotor half (6) being provided with permanent magnets (9), the south poles of which point towards the air gap of the electric machine, and the permanent-field poles (11) of both rotor halves (5 and 6) being offset with respect to each other by one pole pitch, which machine is furthermore provided with an electric field coil (16) which is constructed as a ring coil, characterised in that the rotor halves (5 and 6) are arranged on the rotor shaft (7) at an axial distance from each other and the field coil (16) is inserted in the space formed between the rotor halves (5 and 6).

2. Machine according to claim 1, characterised in that the permanent magnets (9) are arranged on the surface of the rotor halves (5 and 6).

3. Machine according to claim 1, characterised in that the permanent magnets (9) are inserted in location openings (8) which are provided in the laminated core and extend in the circumferential direction, with the arrangement and design of the location openings (8) being such that a magnetic short-circuit of the permanent magnets (9) inserted in the location openings (8) is prevented.

4. Machine according to claim 3, characterised in that the secant-like core portions (11) of the laminated rotor core that adjoin the location openings (8) towards the circumference of the rotor are connected to the adjacent non-excited pole portions (13) only by way of saturation segments (12).

5. Machine according to claim 3 or 4, characterised in that the permanent magnets (9) are held in the location openings (8) by introduction of a hardenable mass.

6. Machine according to one of the preceding claims, characterised in that the winding (18) of the field coil (16) is arranged on a winding support (17).

7. Machine according to claim 6, characterised in that the winding support (17) is closed, on its circumferential side which corresponds to the circumferential side of the rotor halves (5 or 6), by means of a wall piece (24).

8. Machine according to claim 7, characterised in that the circumferential-side wall piece (24) is connected in one piece to a radially extending side wall of the winding support (17).

9. Machine according to claim 8, characterised in that the winding support (17) has a U-shaped cross-section in the axial direction.

10. Machine according to one of the preceding claims, characterised in that the rotor halves (5 and 6) and the field coil (16) are constructed as individual models which can be handled independently and can be mounted on the rotor shaft (7).

11. Machine according to one of claims 6 to 10, characterised in that the winding support (17) is arranged on the rotor shaft (7) in a rotationally secure manner.

12. Machine according to claim 11, characterised in that provided on the winding support (17) are axial projections (26) which engage in corresponding recesses (27) of the laminated cores of one or both rotor halves (5 or 6).

13. Machine according to claim 11, characterised in that the winding support (17) is held on the rotor shaft (7) by a force fit.

14. Machine according to one of claims 6 to 13, characterised in that the winding (18) mounted on the winding support (17) and/or the winding support (17) is/are embedded in a hardenable mass.

## Revendications

1. Machine électrique à excitation hybride, comprenant un paquet (2) de tôles statoriques disposé dans une culasse (1) magnétique de retour et portant un enroulement (3) statorique, machine dans laquelle le rotor (4) est subdivisé axialement en deux moitiés (5 et 6) de rotor et chaque moitié (5 et 6) de rotor comporte, se succédant conformément à leurs pas polaires, des pôles (11) excités par aimants permanents et des pôles (13) non excités, une moitié (5) de rotor étant munie d'aimants (9) permanents dont les pôles nord sont tournés vers l'entrefer de la machine électrique et l'autre moitié (6) de rotor étant munie d'aimants (9) permanents dont les pôles sud sont toumés vers l'entrefer de la machine électrique et les pôles (11) excités par aimants permanents des deux moitiés (5 et 6) de rotor étant décalés les uns par rapport aux autres d'un pas polaire, machine qui est munie en outre d'une bobine (16) électrique d'excitation constituée en bobine annulaire, caractérisée en ce que les moitiés (5 et 6) de rotor sont montées sur l'arbre (7) du rotor en étant à distance axialement l'une de l'autre et la bobine (16) d'excitation est insérée dans l'intervalle existant entre les moitiés (5 et 6) de rotor.

2. Machine suivant la revendication 1,
caractérisée en ce que les aimants (9) permanents sont disposés à la surface des moitiés (5 et 6) de rotor.

3. Machine suivant la revendication 1,
caractérisée
en ce que les aimants (9) permanents sont insérés dans des ouvertures (8) de réception prévues dans le paquet de tôles et s'étendant en direction périphérique, la position et la conformation des ouvertures (8) de réception étant telles que tout court-circuit magnétique des aimants insérés dans les ouvertures (8) de réception soit empêché.

4. Machine suivant la revendication 3,
caractérisée
en ce que les parties (11) du paquet de tôles de rotor de type sécantes et adjacentes aux ouvertures (8) de réception vers la périphérie du rotor sont reliées simplement par des réglettes (12) de saturation aux pièces (13) polaires voisines qui ne sont pas excitées.

5. Machine suivant la revendication 3 ou 4,
caractérisée
en ce que les aimants (9) permanents sont maintenus dans les ouvertures (8) de réception par apport d'une composition durcissable.

6. Machine suivant l'une des revendications précédentes,
caractérisée
en ce que l'enroulement (18) de la bobine (16) d'excitation est monté sur un support d'enroulement (17).

7. Machine suivant la revendication 6,
caractérisée
en ce que le support d'enroulement (17) est fermé au moyen d'une partie (24) formant cloison sur son côté périphérique correspondant au côté périphérique des moitiés (5 et 6) de rotor.

8. Machine suivant la revendication 7,
caractérisée
en ce que la partie (24) formant cloison du côté périphérique est reliée d'une pièce avec une cloison latérale du support d'enroulement (17), qui s'étend radialement.

9. Machine suivant la revendication 8,
caractérisée
en ce que le support d'enroulement (17) a, en direction axiale, une section transversale en forme de U.

10. Machine suivant l'une des revendications précédentes,
caractérisée
en ce que les moitiés (5 et 6) de rotor et la bobine (16) d'excitation sont constituées en un module unique pouvant être manipulé de manière autonome et pouvant être monté sur l'arbre (7) du rotor.

11. Machine suivant l'une des revendications 6 à 10,
caractérisée
en ce que le support d'enroulement (17) est monté solidaire en rotation de l'arbre (7) du rotor.

12. Machine suivant la revendication 11,
caractérisée
en ce qu'il est prévu sur le support d'enroulement (17) des saillies (26) axiales pénétrant dans des évidements (27) correspondants des paquets de tôle de l'une des deux moitiés (5 ou 6) de rotor.

13. Machine suivant la revendication 11,
caractérisée
en ce que le support d'enroulement (17) est maintenu par ajustage serré sur l'arbre (7) du rotor.

14. Machine suivant l'une des revendications 6 à 13,
caractérisée
en ce que l'enroulement (18) appliqué sur le support d'enroulement (17) et/ou le support d'enroulement (17) sont incorporés à une composition durcissable.
